# EUROPEAN PATENT SPECIFICATION

(11) **EP 1 826 463 B1**
(45) Date of publication and mention of the grant of the patent: **18.02.2009**
(21) Application number: 06025606.2
(22) Date of filing: 11.12.2006
(51) Int. Cl.: F16H 61/28, F16H 61/32

(54) **Shift actuator, vehicle, and method of assembly of a vehicle**
Schaltvorrichtung, Fahrzeug, und Herstellungsverfahren für ein Fahrzeug
Actionneur pour boite de vitesses, véhicule, et méthode d'assemblage d'un véhicule

(30) Priority: 18.04.2006 JP 2006114707; 24.02.2006 JP 2006048086
(43) Date of publication of application: 29.08.2007
(73) Proprietor: Yamaha Hatsudoki Kabushiki Kaisha, Iwata-shi, Shizuoka 438-8501 (JP)
(72) Inventor: Kosugi, Makoto c/o Yamaha Hatsudoki Kabushiki Kaisha, Shizuoka-ken 438-8501 (JP); Takeuchi, Yoshihiko c/o Yamaha Hatsudoki Kabushiki Kaisha, Shizuoka-ken 438-8501 (JP)
(74) Representative: Grünecker, Kinkeldey, Stockmair & Schwanhäusser Anwaltssozietät

(56) References cited:
- EP-A- 1 469 236
- EP-A- 1 666 772
- WO-A-91/10979
- US-A- 5 121 649

## Description

The present invention relates to a method to assemble a vehicle, in particular a riding-type vehicle and to a shift actuator according to the preamble of independent claim 4. Such shift actuator can be taken from the prior art document US 5,121,649.

A motorcycle is known as an example of a vehicle. Normally, a motorcycle includes a transmission with which a speed of rotation of a crankshaft of an engine is changed and is transmitted to a drive wheel. The transmission includes a shift mechanism having a main shaft and a drive shaft and a plurality of stages of speed change gears, and a clutch mechanism for interrupting transmission of rotation in changing gears. Further, there is also known a motorcycle including an automated manual transmission mechanism (AMT mechanism) for automatically switching a speed change gear of a transmission (refer to, for example, Patent Reference 1).

The motorcycle including the above-described AMT mechanism includes a shift actuator for driving a shift mechanism, and a shift power transmitting mechanism for connecting the shift actuator and the shift mechanism for transmitting a drive force of the shift actuator to the shift mechanism.

The shift actuator includes a motor as a drive source and includes a shift potentiometer for detecting a rotational angle of the motor, and is constituted to acquire a speed change position of the shift mechanism based on a result of detection of the shift potentiometer.
Patent Reference 1: JP-A-2006-017221

Meanwhile, the shift mechanism is constituted to be able to rotate in two directions of a regular rotational direction and an inverse rotational direction from a reference position (neutral position). Further, the shift mechanism is constituted to be able to change a speed change gear by being rotated from the reference position. Therefore, according to the above-described AMT mechanism, calibration of the shift actuator is carried out in order to match the reference position in production at a factory, maintenance or the like. Specifically, when the shift potentiometer is installed at a position at which a voltage value thereof becomes a reference value, the shift power transmitting mechanism is arranged at the reference position.

However, according to calibration of the shift actuator of the background art, the position of the shift power transmitting mechanism is adjusted manually by an operator while confirming the voltage value of the potentiometer and therefore, the operation is complicated. Therefore, integration performance and maintenance performance of a vehicle is low.

The invention has been carried out in view of such a point and it is an object thereof to provide method to assemble a vehicle, and a shift actuator as indicated above which can promote integration performance and maintenance performance of a vehicle by promoting convenience in carrying out calibration of a shift actuator.

This objective is solved in an inventive manner by method to assemble a vehicle, having the features of independent claim 1. Preferred embodiments are laid down in the dependent claims.

Accordingly, it is provided a method to assemble ("integrate") a vehicle, in particular a riding-type vehicle, said vehicle comprising: a shift mechanism including a plurality of stages of speed change gears; a shift actuator including a drive shaft, a housing, and a position sensor for detecting a rotational position of the drive shaft for driving the shift mechanism; and a shift power transmitting mechanism for connecting the shift mechanism and the shift actuator and capable of adjusting a length thereof, the method comprising: a step of temporarily fixing the drive shaft relative to the housing to be unable to rotate; a step of attaching the position sensor to the shift actuator in a state in which the drive shaft is temporarily made to be unable to rotate relative to the housing; and a step of adjusting a length of the shift power transmitting mechanism in the state in which the drive shaft is temporarily made to be unable to rotate relative to the housing.

Preferably, the drive shaft is rotatably supported by the housing, and wherein the drive shaft is temporarily fixed to the housing to be unable to rotate relative to the housing. Therein, the position sensor may be supported by the housing.

For the apparatus aspect, this objective is solved a shift actuator having the features of independent claim 4. Preferred embodiments are laid down in the dependent claims.

Accordingly, it can be provided a vehicle, comprising: a shift mechanism including a plurality of stages of speed change gears; a shift actuator including a drive shaft, a housing, and a position sensor for detecting a rotational position of the drive shaft for driving the shift mechanism; and a shift power transmitting mechanism for connecting the shift mechanism and the shift actuator and capable of adjusting a length thereof; wherein the shift actuator is formed with a first support portion for supporting a fixing member for temporarily fixing the drive shaft to the shift actuator to be unable to rotate.

Preferably, the drive shaft is rotatably supporting by the housing. Therein, the housing may be formed with the first support portion for supporting the fixing member.

Further, preferably the position sensor is supported by the housing.

According to another preferred embodiment, the vehicle further comprises a lever pivoted cooperatively with rotation of the drive shaft, wherein the lever is formed with a second support portion for supporting the fixing member for temporarily fixing the drive shaft to the housing to be unable to rotate.

Preferably, a portion of the drive shaft is projected from the housing, the lever is attached to that portion of the drive shaft, which is projected from the housing such that at least a portion of the lever is disposed at an outer portion of the housing, the first support portion is formed at an outer surface of the housing, and the second support portion is formed at the portion of the lever disposed at the outer portion of the housing.

Further, preferably the fixing member is a rod-like member, the first support portion is a recess portion inserted with the fixing member, and the second support portion is a through insertion portion to which the fixing member is inserted.

Still further, preferably the recess portion is a bottomed hole, and the through insertion portion is a through hole.

Yet further, preferably the vehicle is a riding type vehicle.

For the apparatus aspect, this objective is further solved by a shift actuator comprising a drive shaft, a housing, and a position sensor for detecting a rotational position of the drive shaft for driving a shift mechanism including a plurality of speed change gears; wherein the shift actuator is formed with a first support portion for supporting a fixing member for temporarily fixing the drive shaft to the shift actuator to be unable to rotate.

Preferably, the drive shaft is supported by the housing, and wherein the housing is providing with the first support portion to temporarily fix the drive shaft relative to the housing.

Further, preferably the position sensor is supported by the housing.

According to another preferred embodiment, the shift actuator further comprises a lever pivoted cooperatively with rotation of the drive shaft, wherein the lever is formed with a second support portion for supporting the fixing member for temporarily fixing the drive shaft to the housing to be unable to rotate.

In the following, the present invention is explained in greater detail with respect to several embodiments thereof in conjunction with the accompanying drawings, wherein:
- Fig. 1: is a side view of a motorcycle according to an embodiment,
- Fig. 2: is a view showing a state of attaching respective constituent members of an automatic transmission control apparatus,
- Fig. 3: is a view showing the state of attaching the respective constituent members of the automatic transmission control apparatus,
- Fig. 4: is a view showing the state of attaching the respective constituent members of the automatic transmission control apparatus,
- Fig. 5: is a view showing the state of attaching the respective constituent members of the automatic transmission control apparatus,
- Fig. 6: is a view showing the state of attaching the respective constituent members of the automatic transmission control apparatus,
- Fig. 7: is a sectional view showing an inner constitution of an engine,
- Fig. 8: is an outline view of a shift actuator and a shift rod and a shift mechanism,
- Fig. 9: is a side view showing the shift actuator and the shift rod and the shift mechanism, and
- Fig. 10: is a sectional view taken along a line A-A of Fig. 9.

### Description of Reference Numerals and Signs:

1..motorcycle (riding type vehicle)
20..engine
40..transmission
43..shift mechanism
43a..shift operating lever
43b..shift operating shaft
43d..bolt
43e,43f..punch marks
44..clutch mechanism
60..clutch actuator
70.. shift actuator
70a..shift motor
70h..housing
70j..operating lever (lever)
70k..bolt
70m..through hole (second supporting portion, inserting portion)
70n..bottomed hole (first supporting portion, recess portion)
70o,70p..punch marks
75..shift rod

The inventor of the present invention have analyzed the AMT mechanism in details and found that factors complicating operation of adjusting the reference position of the shift mechanism are the following two points. One thereof is that portions to be adjusted are present at two portions of the position sensor and the shift power transmitting mechanism. Other thereof is that both of the two adjustable portions are directly or indirectly connected to the drive shaft. Further, as a result of carrying out an intensive research on a method of easily carrying out calibration of the shift actuator from the factors of the two points, it has been found that when the drive shaft is tackedly fixed to be unable to rotate relative to a housing, by constituting a reference by a position of the tackedly fixed drive shaft, the above-described two portions can be adjusted easily and independently separately.

Embodiments will be explained in details in reference to the drawings as follows.

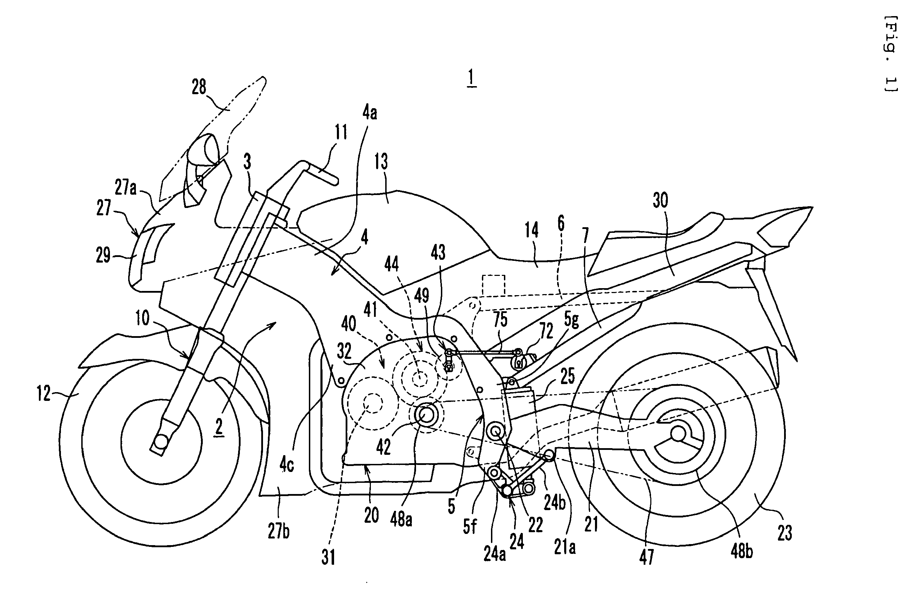

Fig. 1 is a side view showing a motorcycle 1 according to the embodiment. As shown by Fig. 1, the motorcycle 1 according to the embodiment includes a head pipe 3 and a vehicle body frame 2. The vehicle body frame 2 include at least a main frame 4 extended rearward from the head pipe 3, and a rear arm bracket 5 extended to a lower side from a rear portion of the main frame 4. The main frame 4 includes two pieces of left and right frame portions 4a (in Fig. 1, only one piece thereof is shown) extended rearward from the head pipe 3, and rear portions of the frame portions 4a are extended to a lower side to be connected to the rear arm bracket 5.

A front fork 10 is axially supported by the head pipe 3. An upper end of the front fork 10 is provided with a steering handle 11, and a lower end thereof is provided with a front wheel 12. A fuel tank 13 is arranged at an upper portion of the main frame 4, and a seat 14 is arranged on a rear side of the fuel tank 13. The seat 14 is mounted on a seat rail 6.

An engine 20 is suspended by the main frame 4 and the rear arm bracket 5.

The engine 20 is supported by an engine attaching portion 4c and the frame portion 4a of the main frame 4 and is supported by an engine attaching portion (not illustrated) of the rear arm bracket 5. Further, the engine 20 is not limited to an internal combustion engine of a gasoline engine or the like but may be a motor engine or the like. Further, the engine may be combined with a gasoline engine and a motor engine.

A front end portion of a rear arm 21 is supported by the rear arm bracket 5 pivotably in an up and down direction by way of a pivot shaft 22. A rear wheel 23 is supported by a rear end portion of the rear arm 21. The rear arm 21 is supported by the vehicle body frame 2 by way of a link mechanism 24 and a rear cushion unit 25. The link mechanism 24 includes a vehicle body side link 24a and a rear arm side link 24b. One end portion of the vehicle body side link 24a is pivotably connected to a link attaching portion 5f of the rear arm bracket 5. One end portion of the rear arm side link 24b is pivotably connected to a link attaching portion 21 a of the rear arm 21. Further, a center portion of the vehicle body side link 24a and other end portion of the rear arm side link 24b are pivotably connected. A lower portion of the rear cushion unit 25 is supported by other end portion of the vehicle body side link 24a and an upper portion thereof is supported by a cushion attaching portion 5g. The rear cushion unit 25 is arranged on a rear side of the rear arm bracket 5.

Further, a cowling 27 is arranged at the vehicle body frame 2. The cowling 27 is constituted by an upper cowling 27a for covering a front side of the steering handle 11, and a lower cowling 27b for covering left and right sides of the main frame 4 and left and right lower sides of the engine 20. Further, the upper cowling 27a is supported by the vehicle body frame 2 by way of a stay, not illustrated, and a front face of a front portion and two side faces in the left and right direction of the vehicle body are formed by the upper cowling 27a. Further, the upper cowling 27a is attached with a screen 28 comprising a transparent member, a head lamp 29 or the like disposed at an upper portion on a front side of the vehicle body. A back stay 7 is arranged with a side cover 30 for covering left and right sides of the seat 14 and an upper side of the rear wheel 23.

Although a kind of the engine is not limited at all in the present embodiment, according to the present embodiment, the engine 20 is of a water-cooled parallel 4 cylinders type. The engine 20 is arranged in a state of slightly inclining a cylinder axis (not illustrated) from a horizontal line to a front side of the vehicle, and a crankcase 32 for containing a crankshaft 31 is suspended and supported by the vehicle body frame 2 on both sides in a vehicle width direction.

Further, the engine 20 is provided with a transmission 40. The transmission 40 includes a main shaft 41 arranged in parallel with the crankshaft 31, a drive shaft 42 arranged in parallel with the main shaft 41, and a shift mechanism 43 including a plurality of stages of speed change gears 49 and is integrally assembled to the crankcase 32. The clutch mechanism 44 interrupts transmission of rotation in switching the speed change gears 49.

The drive shaft 42 is provided with a drive sprocket 48a, and a chain 47 is hung around the drive sprocket 48a and a driven sprocket 48b provided at the rear wheel 23. Thereby, engine power is transmitted to the rear wheel 23 by way of the chain 47.

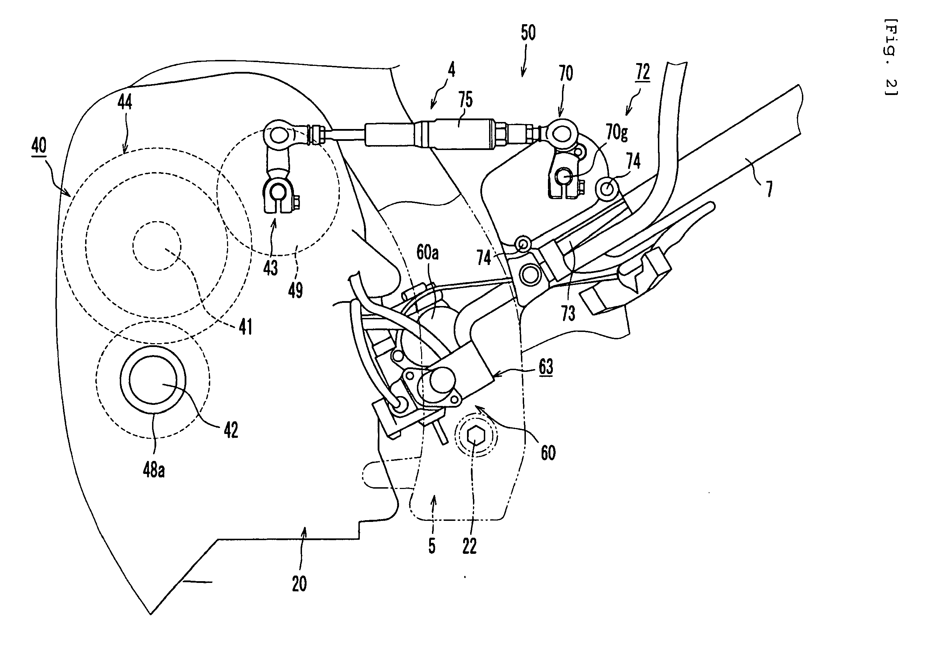

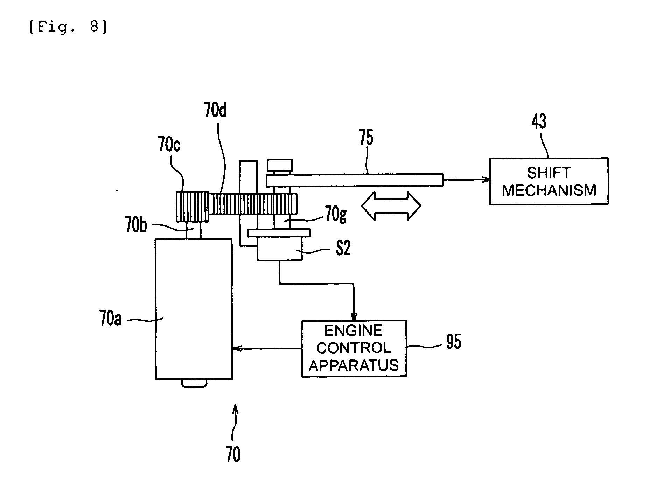

Next, an automatic transmission control apparatus 50 provided to the motorcycle 1 will be explained. Fig. 2 through Fig. 6 are views showing a state of attaching respective constituent members of the automatic transmission control apparatus 50. As shown by Fig. 2, the automatic transmission control apparatus 50 automatically interrupts the clutch mechanism 44 and switches the speed change gears of the transmission apparatus 40 and is constituted by including a clutch actuator 60 for driving the clutch mechanism 44, a shift actuator 70 for switching the speed change gears of the transmission apparatus 40, and an engine control apparatus 95 (Not illustrated in Fig. 2. Refer to Fig. 8) for controlling to drive the clutch actuator 60 and the shift actuator 70.

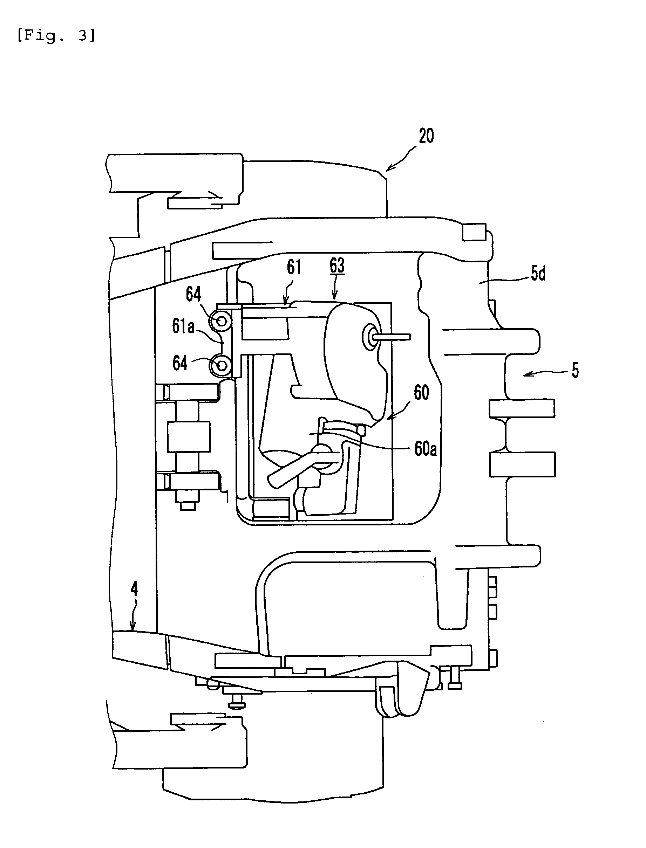

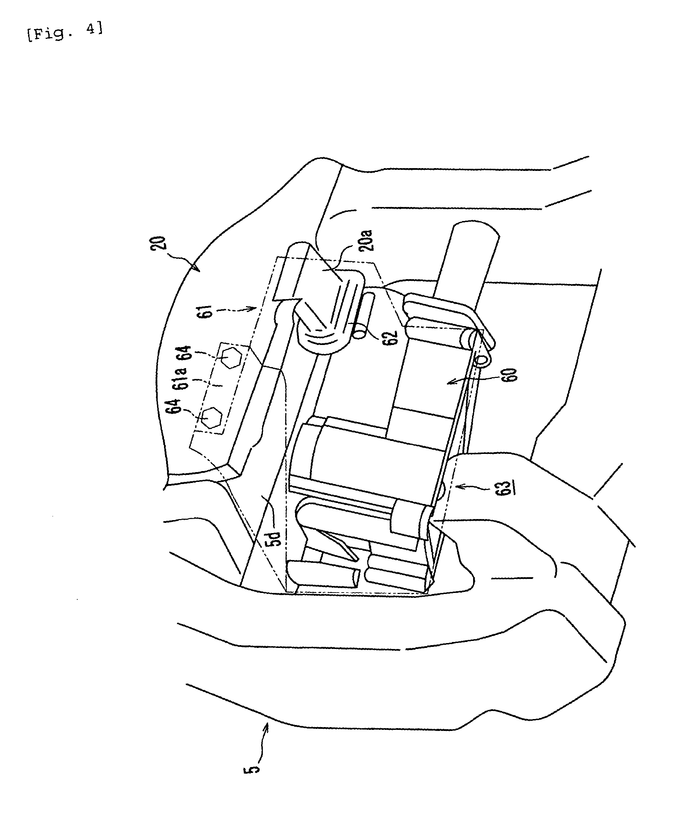

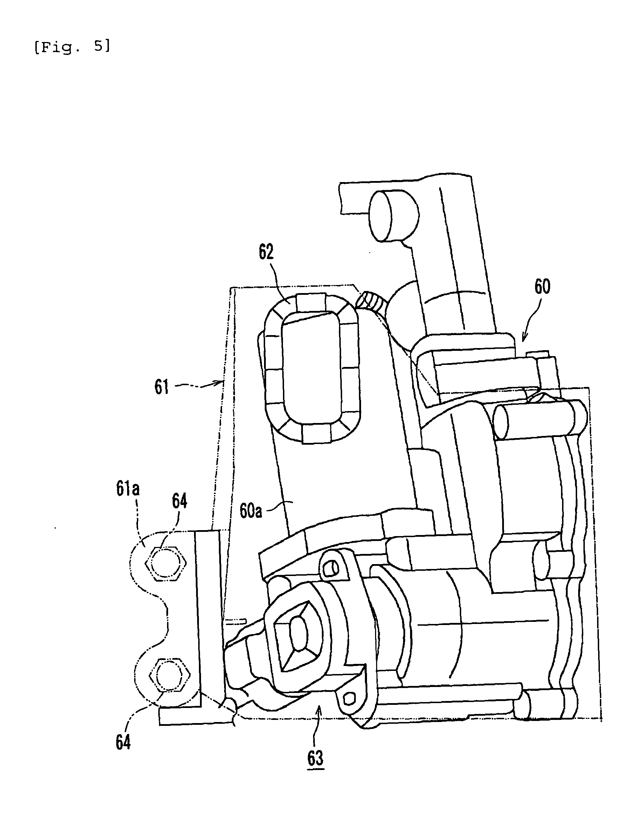

As shown by Fig. 3, the clutch actuator 60 is formed at a clutch operating unit 63 integrated by attaching various constituent elements to an attaching plate 61. The attaching plate 61 is fixed with an engaging hole portion 62 (refer to Fig. 4 and Fig. 5). As shown by Fig. 4, the clutch operating unit 63 is attached by engaging the engaging hole portion 62 to a projected portion 20a fixed to a rear portion of the engine 20 and fastening to fix an attaching portion 61 a of the attaching plate 61 to a member portion 5d of the rear arm bracket 5 by a fastening piece 64 of a bolt or the like. In this way, a position of arranging the clutch operating unit 63 is a position surrounded by the rear arm bracket 5 on a rear side of the engine 20 in a side view thereof (refer to Fig. 1).

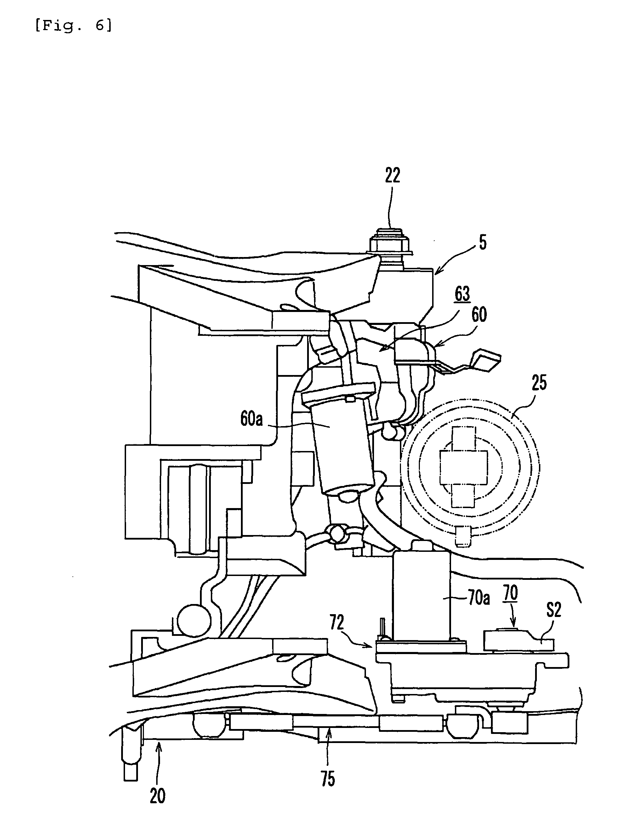

As shown by Fig. 2 and Fig. 6, the shift actuator 70 is integrated with a shift position detecting apparatus S2 (refer to Fig. 6) and these are constituted as a shift operating unit 72. As shown by Fig. 2, an attaching bracket 73 is fixed to the back stay 7. The shift operating unit 72 is attached by fastening to fix to the shift actuator 70 to the attaching bracket 73 by a fastening piece 74 of a bolt or the like. In this way, a position of arranging the shift operating unit 72 is disposed on a side opposed to the transmission 40 by interposing the main frame 4 and the shift actuator 70 is disposed on a rear side of the main frame 4 in a side view thereof.

The shift mechanism 43 and the shift actuator 70 are connected by a shift power transmitting mechanism and according to the embodiment, the shift power transmitting mechanism is constituted by a shift rod 75.

The shift rod 75 traverses the vehicle body frame 2 in a side view thereof.

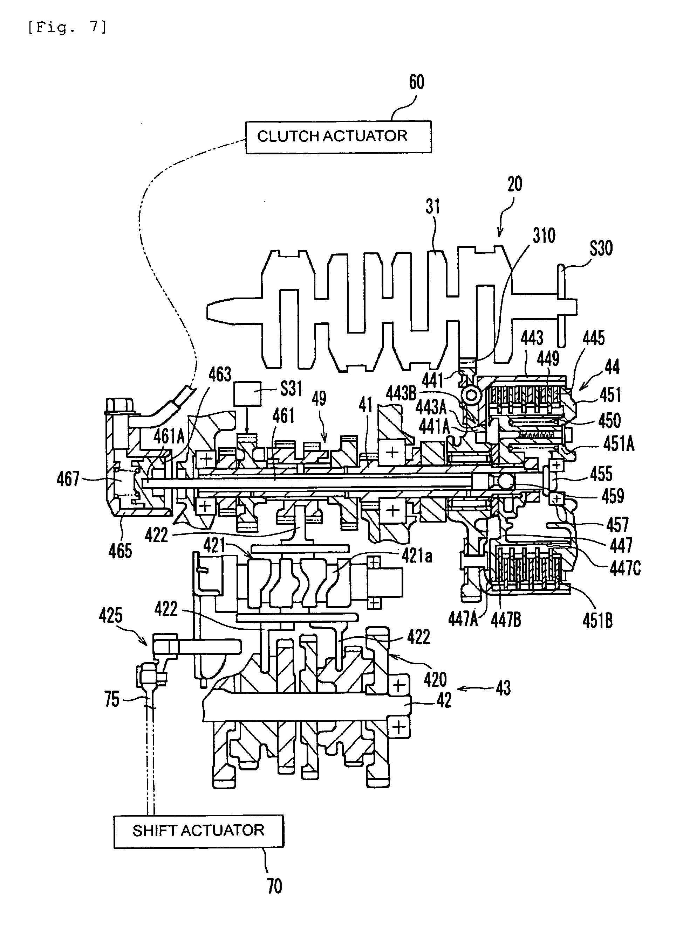

Next, a detailed constitution of the clutch mechanism 44 will be explained. Fig. 7 is a sectional view showing an inner constitution of the engine 20.

The clutch mechanism 44 according to the embodiment is, for example, a multiple disk friction clutch and includes a clutch housing 443, a plurality of friction plates 445 integrally provided to the clutch housing 443, a clutch boss 447, and a plurality of clutch plates 449 integrally provided to the clutch boss 447. A crankshaft gear 310 of the engine 20 is integrally supported by the crankshaft 31 of the engine 20, and a gear 441 rotatable relative to the main shaft 41 and brought in mesh with the gear 310 is supported by the main shaft 41. The clutch housing 443 is integrally provided to the gear 441 and a torque is transmitted from the crankshaft 31 to the clutch housing 443 by way of the gear 441. The torque is transmitted from the clutch housing 443 to the clutch boss 447 by a friction force generated among the plurality of friction plates 445 and the plurality of clutch plates 449.

The gear 441 is pivotably supported by the main shaft 41 at one end side (right side of Fig. 7) of the main shaft 41. The clutch housing 443 is rotatable relative to the main shaft 41 while being restricted from moving in an axial direction of the main shaft 41 by being integrally provided at the boss portion of the gear 441. Further, the clutch boss 447 is provided integrally with the main shaft 41 on one end portion side (further end portion side of the gear 441) of the main shaft 41.

The clutch boss 447 is provided on an inner side of the clutch housing 443 in a cylindrical shape. Centers of rotation of the gear 441 and the clutch housing 443 and the clutch boss 447 and the main shaft 41 coincide with each other and these are present concentrically.

The boss portion of the gear 441 is provided with an engaging projected portion 441A in a cylindrical shape. One end portion side (left side of Fig. 7) of the clutch housing 443 in a cylindrical shape is provided with an engaging portion 443B formed with an engaging hole 443A engaged with the engaging projected portion 441A. By fitting the engaging projected portion 441 A to the engaging hole 443A, the clutch housing 443 is fixed to the gear 441.

Each friction plate 445 is a thin plate in a ring-like shape, and an outer peripheral edge of each friction plate 445 is supported by an inner peripheral side of the cylindrical portion of the clutch housing 443 such that a plate face of each friction plate 445 becomes substantially orthogonal to the axial direction of the main shaft 41. By supporting in this way, each friction plate 445 is made to be slightly movable in the axial direction of the main shaft 41 relative to the clutch housing 443, further, restricted not to be rotated in a rotational direction of the main shaft 41 relative to the clutch housing 443.

Further, the respective plate faces of the respective friction plates 445 are spaced apart from each other by a predetermined interval (a distance slightly larger than a thickness of the clutch plate 449).

The clutch boss 447 is constituted by a cylindrical shape, and one end portion side (left side of Fig. 7) of the clutch boss 447 is provided with a flange portion 447A in a circular shape having an outer diameter substantially equal to an outer diameter of the clutch plate 449. The plurality of clutch plates 449 are supported by an outer periphery of a portion of the clutch boss 447 constituted by the cylindrical shape. By supporting in this way, each clutch plate 449 is made to be slightly movable in the axial direction of the main shaft 41 relative to the boss 447, further, restricted not to be able to be rotated in the rotational direction of the main shaft 41 relative to the clutch boss 447.

Further, the clutch boss 447 is fixed to one end portion side (right side of Fig. 7) of the main shaft 41 such that the flange portion 447A is disposed at an engaging portion 443B of the clutch housing 443.

Each clutch plate 449 is constituted by a thin plate in a ring-like shape, and an inner peripheral edge of each clutch plate 449 is supported by an outer peripheral side of the cylindrical portion of the clutch boss 447 such that a plate face of each clutch plate 449 becomes substantially orthogonal to the axial direction of the main shaft 41.

Further, the respective plate faces of the respective clutch plates 449 are spaced apart from each other by a predetermined interval (a distance slightly larger than a thickness of the friction plate 445) therebetween.

An outer diameter of each clutch plate 449 is slightly smaller than an inner diameter of the cylindrical portion of the clutch housing 443, and an inner diameter of each friction plate 445 becomes slightly larger than an outer diameter of the cylindrical portion of the clutch boss 447. Further, the friction plates 445 and the clutch plates 449 are alternately arranged in the axial direction of the main shaft 41, and small gaps are formed between the friction plates 445 and the clutch plates 449 respectively in the axial direction of the main shaft 41.

A pressing portion 447B constituted by the flange portion 447A of the clutch boss 447 is present on an outer side in the axial direction of the main shaft 41 of the friction plates 445 and the clutch plates 449 arranged alternately and on a side (left side of Fig. 7) of the engaging portion 443B of the clutch housing 443. The pressing portion 447B generates friction forces between the respective friction plates 445 and the respective clutch plates 449 along with a pressure plate 451 by squeezing the friction plates 445 and the clutch plates 449 in the axial direction of the main shaft 41.

An inner side of the clutch boss 447 in the cylindrical shape is arranged with a plurality of guide portions 447C in a cylindrical shape extended in the axial direction of the main shaft 41 integrally with the clutch boss 447. The pressure plate 451 is provided with a plurality of guide portions 451A engaged with respectives of the guide portions 447C. The pressure plate 451 is provided to be able to move relative to the clutch boss 447 in the axial direction of the main shaft 41 by the guide portions 447C and the guide portions 451 A, further, rotated simultaneously with the clutch boss 447. Further, the pressure plate 451 is driven by the clutch actuator 60. The clutch actuator 60 will be described later in details in reference to the drawings.

Further, the pressure plate 451 includes a pressing portion 451B in a planer shape. The pressing portion 451 B is substantially in parallel with the plate faces of the respective friction plates 445 and the respective clutch plates 449.

The clutch mechanism 44 is provided with a plurality of springs 450 to surround respectives of the plurality of guide portions 447C in a cylindrical shape. The respective springs 450 urge the pressure plate 451 to a left side of Fig. 7. That is, the respective springs 450 urge the pressure plate 451 in a direction in which the pressing portion 451B of the pressure plate 451 becomes proximate to the pressing portion 447B of the clutch boss 447.

The pressure plate 451 is engaged with one end portion side (right side of Fig. 7) of a push rod 455 by way of a bearing of a deep groove ball bearing 457 or the like at a center portion of the pressure plate 451 and is made to be rotatable relative to the push rod 455. Other end portion (left side of Fig. 7) of the push rod 455 is engaged to the inner side of one end portion of the main shaft 41 in the cylindrical shape. An inner side of the main shaft 41 in the cylindrical shape is provided with a ball 459 in a spherical shape contiguous to other end portion (left end portion) of the push rod 455, further, a left side of the ball 459 is provided with a push rod 461 contiguous to the ball 459.

One end portion (left end portion) 461 A of the push rod 461 is projected from other end portion of the main shaft 41 in the cylindrical shape. The one end portion 461A is integrally provided with a piston 463.

The piston 463 is guided by a cylinder main body 465 and is made to be slidable in the axial direction of the main shaft 41.

When a working fluid as a compressing fluid is supplied to a space 467 surrounded by the piston 463 and the cylinder main body 465, the piston 463 is pushed to be moved in the right direction of Fig. 7. Thereby, the piston 463 pushes the pressure plate 451 in the right direction of Fig. 7 by way of the push rod 461, the ball 459, the push rod 455 and the deep groove ball bearing 457. In this way, when the pressure plate 451 is pushed in the right direction of Fig. 7, the pressing portion 451B of the pressure plate 451 is separated from the friction plate 445, and the clutch is brought into a disconnected state.

When the clutch mechanism 44 is connected, the pressure plate 451 is urged in a direction of the flange portion 447A of the clutch boss 447 (left direction of Fig. 7) by the spring 450 and is moved in the direction. Under the state, the friction forces are generated between the respective friction plates 445 and the respective clutch plates 449 by the pressing portion 447B of the clutch boss 447 and the pressing portion 451B of the pressure plate 451. Thereby, a drive force can be transmitted from the clutch housing 443 to the clutch boss 447.

On the other hand, in the state of disconnecting the clutch mechanism 44, the pressure plate 451 is moved to the right side of Fig. 7 by the push rod 455. Further, the pressing portion 451B of the pressure plate 451 is separated from the friction plate 445 disposed at a location the most proximate to the pressing portion 451B (friction plate 445 on the rightmost side of Fig. 7).

Under the state, the respective friction plates 445 and the respective clutch plates 449 are not squeezed but the slight gaps are formed between the respective friction plates 445 and the respective clutch plates 449. Therefore, the friction forces capable of transmitting the drive force are not generated between the respective friction plates 445 and the respective clutch plates 449.

In this way, the pressure plate 451 is moved in one or other direction in the axial direction of the main shaft 41 by large or small of the drive force of the clutch actuator 60 and the urge force of the spring 450 and the clutch is brought into the connected or disconnected state in accordance with the movement.

Next, a detailed constitution of the shift mechanism 43 will be explained in reference to Fig. 7.

According to the engine 20, an end portion of the crankshaft 31 is mounted with an engine rotational number sensor S30. The crankshaft 31 is connected to the main shaft 41 by way of the multiple plate type clutch mechanism 44. The main shaft 41 is mounted with multiple stages of the speed change gears 49 and is provided with a main shaft rotational number sensor S31. The respective speed change gears 49 on the main shaft 41 are brought in mesh with speed change gears 420 mounted on the drive shaft 42 in correspondence with the speed change gears 49 (which are drawn to be separated from each other in the drawing). Either one or both of the speed change gear 49 and the speed change gear 420 are mounted on the main shaft 41 or the drive shaft 42 in an idly rotating state (idling state) other than a selected pair of speed change gears. Therefore, transmission of rotation from the main shaft 41 to the drive shaft 42 is carried out only by way of the selected pair of the speed change gears.

A gear change operation for changing a speed change ratio by selecting the speed change gear 49 and the speed change gear 420 is carried out by a shift cam 421 constituting a shift input shaft. The shift cam 421 includes a plurality of cam grooves 421 a and shift forks 422 are mounted to the respective cam grooves 421 a. The respective shift forks 422 are respectively engaged with predetermined ones of the speed change gears 49 and the speed change gears 420 of the main shaft 41 and the drive shaft 42. By rotating the shift cam 421, the shift forks 422 are moved in respective axial directions by being guided by the cam grooves 421a and only a pair of the speed change gear 49 and the speed change gear 420 at positions in accordance with a rotational angular position of the shift cam 421 are brought into a fixed state respectively by splines relative to the main shaft 41 and the drive shaft 42. Thereby, the positions of the speed change gears are determined and transmission of rotation is carried out by the predetermined speed change ratio between the main shaft 41 and the drive shaft 42 by way of the speed change gear 49 and the speed change gear 420.

The shift mechanism 43 reciprocally moves the shift rod 75 by driving the shift actuator 70 and rotates the shift cam 421 by a predetermined angle by way of a shift link mechanism 425. Thereby, the shift fork 422 is moved in the axial direction by a predetermined amount by following the cam groove 421 a, pairs of the speed change gears 49 and the speed change gears 420 are brought into the state of being fixed to the main shaft 41 and the drive shaft 42 in turn, and the rotational drive force is transmitted by respective speed reduction ratios.

Next, a further detailed constitution of the shift actuator 70 will be explained. Further, the shift actuator 70 may be a hydraulic type or may be an electric type.

Fig. 8 is an outline view of the shift actuator 70 and the shift rod 75 and the shift mechanism 43. As shown by Fig. 8, according to the shift actuator 70 of the embodiment, a shift motor 70a is rotated by a signal from the engine control apparatus 95, and a gear 70c of a motor shaft 70b is rotated by rotating the shift motor 70a. By rotating the gear 70c, a speed reduction gear 70d is cooperatively rotated to rotate a drive shaft 70g.

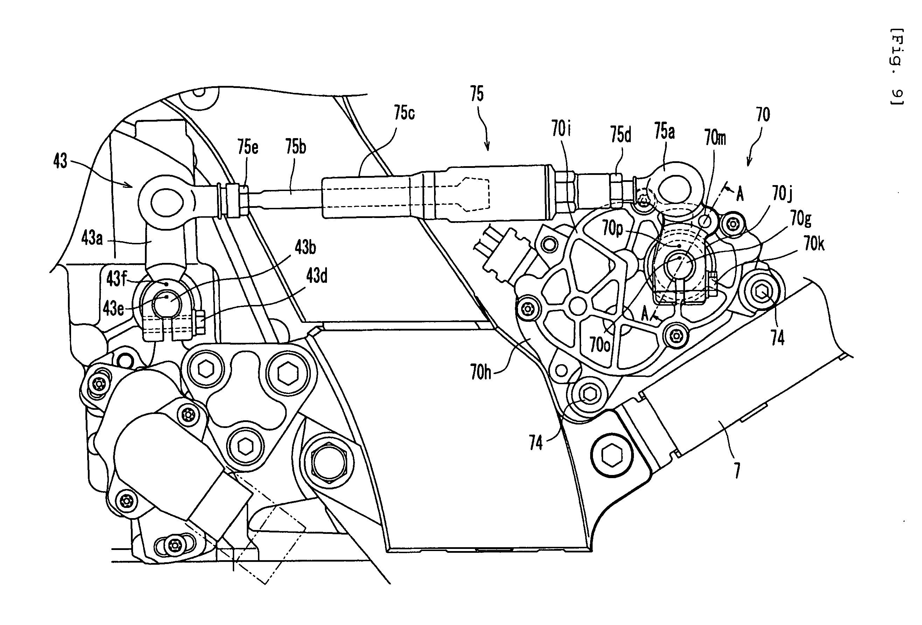

Fig. 9 is a side view showing the shift actuator 70 and the shift rod 75 and the shift mechanism 43. As shown by Fig. 9, the attaching bracket 73 (refer to Fig. 2) fixed to the back stay 7 is fixed with a housing 70h of the shift actuator 70 by a fastening piece 74.

The drive shaft 70g (also refer to Fig. 8) is provided with an operating lever 70j and the operating lever 70j is connected with a connecting portion of the shift rod 75 on a side of the shift actuator 70 (right side in Fig. 9) by a bolt, not illustrated). The connecting portion of the shift rod 75 on the side of the shift actuator 70 is made to be pivotable relative to the operating lever 70j. Further, the operating lever 70j is fastened to be fixed to the drive shaft 70g by a bolt 70k, thereby, the operating lever 70j is made to be unable to move in an axial direction of the drive shaft 70g.

The drive shaft 70g is arranged with the shift position detecting apparatus S2 (refer to Fig. 8). The shift position detecting apparatus S2 is arranged at an end portion (an end portion on a depth side of paper face of Fig. 9) of the drive shaft 70g and is fastened to be fixed to the housing 70h by an attaching bolt (not illustrated). The position detecting apparatus S2 detects position information from rotation of the drive shaft 70g and transmits the position information to the engine control apparatus 95. The engine control apparatus 95 controls the shift motor 70a based on the position information. The above-described shift position detecting apparatus S2 corresponds to a position sensor according to the present embodiment.

Further, a connecting portion of the shift rod 75 on a side of the shift mechanism 43 is connected to a shift operating lever 43a of the shift mechanism 43 by a bolt (not illustrated). The connecting portion of the shift rod 75 on the side of the shift mechanism 43 is made to be pivotable relative to the shift operating lever 43a. Further, the shift operating lever 43a is fastened to be fixed to a shift operating shaft 43b by a bolt 43d, thereby, the shift operating lever 43a is made to be unable to move in the axial direction of the shift operating shaft 43b.

When the shift rod 75 is moved, the shift operating lever 43a is moved in accordance therewith. The movement of the shift operating lever 43a at this occasion is a pivoting movement constituting an axis by the shift operating shaft 43b fitted to the shift operating lever 43a by a spline. Therefore, in accordance with movement of the shift operating lever 43a, the shift operating shaft 43b is rotated.

The shift rod 75 includes a first rod constituting portion 75a connected to the operating lever 70j by the bolt, and a second rod constituting portion 75b connected to the shift operating lever 43a. A portion of the second rod constituting portion 75b on a side of the shift actuator 70 is formed with a screw portion, a portion of the first rod constituting portion 75a on a side of the shift mechanism 43 is formed with a screw hole, and the second rod constituting portion 75b is screwed to the first rod constituting portion 75a. A length of the shift rod 75 can be changed by rotating the second rod constituting portion 75b relative to the first rod constituting portion 75a, or rotating the first rod constituting portion 75a relative to the second rod constituting portion 75b. Further, a structure for changing the length of the shift rod 75 is not limited to that shown in Fig. 9 but various structures can be adopted.

Further, a fastening nut 75d is provided at a vicinity of a portion of the first rod constituting portion 75a connected to the operating lever 70j. By fastening the fastening nut 75d, the first rod constituting portion 75a can be rotated and a position (rotational position) of the first rod constituting portion 75a can be fixed. Further, a fastening nut 75e is provided at a vicinity of a portion of the second rod constituting portion 75b connected to the shift operating lever 43a. By fastening the fastening nut 75d, the second rod constituting portion 75b can be prevented from being rotated and the position (rotational position) of the second rod constituting portion 75b can be fixed.

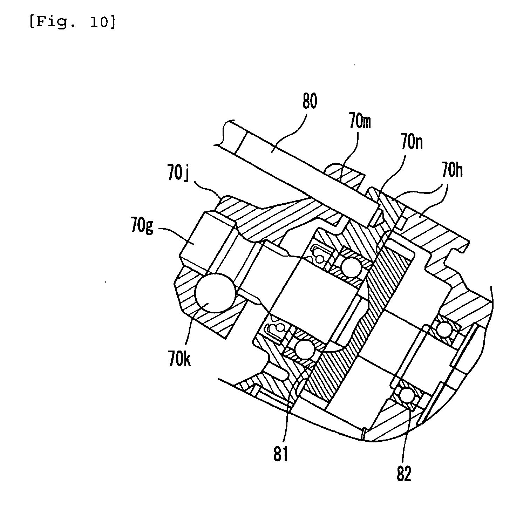

Fig. 10 shows a sectional view taken along a line A-A of Fig. 9. As shown by Fig. 10, the operating lever 70j is fastened to be fixed to the drive shaft 70g by the bolt 70k (also refer to Fig. 9). Thereby, the operating lever 70j is made to be unable to move in an axial direction (left and right direction in Fig. 10) of the drive shaft 70g. The operating lever 70j is pivoted by constituting a center by an axis center of the drive shaft 70g in accordance with rotation of the drive shaft 70g. The drive shaft 70g is rotatably supported by the housing 70h by way of bearings 81, 82.

A through hole 70m is formed at an upper portion of the operating lever 70j (also refer to Fig. 9), and a bottomed hole 70n is formed at the housing 70h. Both of the through hole 70m and the bottomed hole 70n are holes in a cylindrical shape having the same diameter. The through hole 70m and the bottomed hole 70n constitute pin holes according to the present embodiment.

Fig. 10 shows a state of inserting a lever positioning pin 80 to the through hole 70m and the bottomed hole 70n. Further, Fig. 9 shows a state in which the lever positioning pin 80 is not inserted thereinto. As shown by Fig. 10, the lever positioning pin 80 is inserted through the through hole 70m and fitted to the bottomed hole 70n. Thereby, a position in a rotational direction of the operating lever 70j can be held at a proper position. Describing conversely, the through hole 70m and the bottomed hole 70n are formed such that the operating lever 70j is arranged at the proper position when brought into a state of capable of inserting the lever positioning pin 80.

Next, with reference to Fig. 9, an explanation will be given of a procedure of attaching the shift actuator 70 in steps of integrating the motorcycle 1. First, by using the bolt 70k, the operating lever 70j is attached to the drive shaft 70g. At this occasion, the position of the operating lever 70j relative to the drive shaft 70g is determined such that a punch mark 70o formed at a shaft end face of the drive shaft 70g and a punch mark 70p formed at the operating lever 70j coincide with each other. In a state in which the punch mark 70o and the punch mark 70p coincide with each other, axis centers of the through hole 70m and the bottomed hole 70n (refer to Fig. 10) substantially coincide with each other to bring about a state of capable of inserting the lever positioning pin 80.

When the operating lever 70j is attached, successively, by inserting the lever positioning pin 80 through the through hole 70m and the bottom hole 70n, the operating lever 70j is tackedly fixed to a reference position. Further, under the state, calibration of the shift position detecting apparatus S2 (refer to Fig. 6) is carried out. That is, a position of installing the shift position detecting apparatus S2 is determined such that a voltage value of the shift position detecting apparatus S2 becomes a predetermined value. Further, when the position of the operating lever 70 is fixed by the lever positioning pin 80, the drive shaft 70g is made to be unable to rotate relative to the housing 70h.

When the position of installing the shift position detecting apparatus S2 is determined and the shift position detecting apparatus S2 is fixed to the position, successively, by using the bolt 43d, the shift operating lever 43a is attached to the shift operating shaft 43b. At this occasion, the position of the shift operating lever 43a relative to the shift operating shaft 43b is determined such that a punch mark 43e formed at a shaft end face of the shift operating shaft 43b and a punch mark 43f formed at the shift operating lever 43a coincide with each other.

When the shift operating lever 43a is attached, successively, the shift actuator 70 in a state of being attached with the operating lever 70j is attached to the attaching bracket 73 (refer to Fig. 2) by using the bolt 74.

When the shift actuator 70 is attached to the attaching bracket 73, successively, the shift rod 75 is attached to the operating lever 70j. Specifically, the first rod constitution portion 70a of the shift rod 75 and the operating lever 70j are fastened by a bolt, not illustrated.

Further, the first rod constituting portion 75a of the shift rod 75 is formed with a hole for inserting the bolt although illustration thereof is omitted. On the other hand, a nut portion provided with a screw hole is formed at one end portion (the end portion on a side opposed to a side of fastening the bolt 70k and an upper end portion of Fig. 9) of the operating lever 70j. Further, the hole of the first rod constituting portion 75a and the screw hole of the operating lever 70j are fitted with a bolt, not illustrated, from a surface side to a backside of paper face of Fig. 9. Thereby, the shift rod 75 is rotatably connected to the operating lever 70j.

After attaching the shift rod 75 to the operating lever 70j as described above, successively, by inserting the lever positioning pin 80 to the through hole 70m and the bottomed hole 70n, the operating lever 70j is tackedly fixed to the reference position. Further, under the state, the length of the shift rod 75 is finely adjusted.

Also the shift operating lever 43a is provided with a nut portion similar to that of the operating lever 70j although illustration thereof is omitted. Further, also the second rod constituting portion 75b of the shift rod 75 is formed with a hole similar to that of the first rod constituting portion 75a. Further, also the second rod constituting portion 75b and the shift operating lever 43a are fastened by a bolt, not illustrated.

The above-described adjustment of the length of the shift rod 75 is carried out such that the position of the hole of the second rod constituting portion 75b and the position of the screw hole of the operating lever 43a coincide with each other. Specifically, the length of the shift rod 75 is adjusted such that when the attaching bolt is inserted into the hole of the second rod constituting portion 75b of the shift rod 75, the attaching bolt can smoothly be inserted into the nut portion of the operating lever 43a. Further, by the attaching bolt, the second rod constituting portion 75b is pivotably connected to the shift operating lever 43a. Thereafter, the lever positioning pin 80 is drawn from the through hole 70m and the bottomed hole 70n, and the fastening nuts 75d, 75e are fastened to thereby fix the length of the shift rod 75.

Fig. 9 shows a state in which the first rod constituting portion 75a and the second rod constituting portion 75b of the shift rod 75 are covered by a cover. Therefore, the respective holes of the first rod constituting portion 75a and the second rod constituting portion 75b are not illustrated.

In this way, according to the motorcycle 1, the operating lever 70j and the housing 70h are respectively formed with the through hole 70m and the bottomed hole 70n and by inserting the lever positioning pin 80 through the through hole 70m to be fitted to the bottomed hole 70n, the position of the operating lever 70j is fixed to the proper position. Therefore, in calibration of the shift actuator 70, it is not necessary to fix the position of the operating lever 70j manually by the operator. As a result, convenience and certainty in carrying out calibration are promoted.

As has been explained above, according to the method of integrating (assembly of) the motorcycle 1 according to the embodiment, in a state of tackedly fixing the drive shaft 70g, the shift position detecting apparatus S2 can be fixed to the housing 70h and therefore, adjustment of the position of the shaft position detecting apparatus S2 can easily be carried out. Further, the position of the shift position detecting apparatus S2 can be adjusted by a single member of the shift actuator 70 and therefore, integration performance can be promoted. Further, the length of the shaft rod 75 can be adjusted in the state of tackedly fixing the drive shaft 70g and therefore, the adjusting operation can be simplified in comparison with the background art in which adjustment is carried out while looking at the output value of the shift position detecting apparatus S2. Further, the operation of adjusting the length of the shaft rod 75 can be carried out independently from the operation of adjusting the position of fixing the shift position detecting apparatus S2 and therefore, integration performance and maintenance performance can be promoted.

Further, although according to the embodiment, an explanation has been given of the case of forming the through hole 70m at the operating lever 70j, the through hole may be formed at any member according to the present embodiment so far as the position of the drive shaft 70g can tackedly be fixed. For example, the through hole may be formed at the shift operating lever 43a. Further, for example, the through holes may be formed at both of the operating lever 70j and the shift operating lever 43a. Further, also with regard to the bottomed hole, the position of forming the bottomed hole is not limited to the mode of the embodiment. For example, the bottomed hole may be formed at the attaching plate 61 or the like.

Further, according to the embodiment, the drive shaft 70g is directly supported by the housing 70h by way of the bearings 81, 82. However, the drive shaft 70g may not be directly supported by the housing 70h but may be supported thereby indirectly. Further, although according to the embodiment, also the position detecting apparatus S2 is directly supported by the housing 70h, the shift position detecting apparatus S2 may indirectly be supported by the housing 70h. Although the length of the shift power transmitting mechanism may be adjusted by elongating and contracting the shift power transmitting mechanism as in the embodiment, there may be constructed any constitution so far as the length can be adjusted. For example, there may be constituted a mechanism of adjusting the length by changing an angle of a combination.

According to the embodiment, the through hole 70m for inserting the lever positioning pin 80 is formed at the operating lever 70j disposed at outside of the housing 70h. Further, the bottomed hole 70n for inserting the lever positioning pin 80 is formed at an outer surface of the housing 70h. In this way, according to the embodiment, the through hole 70m and the bottomed hole 70n are formed on an outer side of the housing 70h and therefore, the drive shaft 70g can easily be fixed tackedly by the lever positioning pin 80.

Although according to the embodiment, an explanation has been given of a case in which a first supporting portion for supporting the lever positioning pin 80 as a fixing member is the bottomed hole 70n, according to the present embodiment, the first supporting portion is not limited to the bottomed hole 70n. For example, there may be constructed a constitution in which the drive shaft 70g is tackedly fixed to the housing 70h to be unable to rotate by constituting the first supporting portion by a projected portion formed at the housing 70h and fitting the projected portion with a fixing member. Further, the projected portion may be formed with a screw portion and the screwed portion may be screwed to the fixing member. Further, when a recess portion of the bottomed hole 70n or the like is adopted as the first supporting portion, a shape of the recess portion is not limited at all. The recess portion is not limited to a hole having a smooth inner peripheral face but may be a screw hole or the like.

Further, although according to the embodiment, an explanation has been given of a case in which a second supporting portion for supporting the lever positioning pin 80 is the through hole 70m, the second supporting portion is not limited to the through hole 70m. Further, a specific shape of the through hole 70m is not limited to a hole having a smooth inner peripheral face but may be, for example, that of a screw hole formed with a screw groove at an inner peripheral face thereof. The shape of the through hole 70m is not limited at all but various shapes can be adopted.

As explained above, the present teaching is useful for the shift actuator, the vehicle having the shift actuator and the method of integrating the vehicle including the shift actuator.

The description above discloses (amongst others), an embodiment of a method of integrating a vehicle comprising a shift mechanism including a plurality of stages of speed change gears, a shift actuator including a drive shaft, a housing for rotatably supporting the drive shaft, and a position sensor supported by the housing for detecting a rotational position of the drive shaft, and a shift power transmitting mechanism for connecting the shift mechanism and the shift actuator and capable of adjusting a length thereof, the method comprising a step (first step) of tackedly fixing the drive shaft to the housing to be unable to rotate, a step (second step)of attaching the position sensor to the housing in a state in which the drive shaft is made to be unable to rotate relative to the housing, and a step (third step) of adjusting the length of the shift power transmitting mechanism in the state in which the drive shaft is made to be unable to rotate relative to the housing.

Further, an order of the second step and the third step is not limited at all. The third step may be carried out after the second step, conversely, the second step may be carried out after the third step.

Further, a vehicle according to one of the embodiments described above comprises a shift mechanism including a plurality of stages of speed change gears, a shift actuator including a drive shaft, a housing for rotatably supporting the drive shaft, and a position sensor supported by the housing for detecting a rotational position of the drive shaft for driving the shift mechanism, and a shift power transmitting mechanism for connecting the shift mechanism and the shift actuator and capable of adjusting a length thereof, wherein the housing is formed with a first support portion for supporting a fixing member for tackedly fixing the drive shaft to the housing to be unable to rotate.

Further, a shift actuator according to one of the embodiments described above is a shift actuator comprising a drive shaft, a housing for rotatably supporting the drive shaft, and a position sensor supported by the housing for detecting a rotational position of the drive shaft for driving a shift mechanism including a plurality of speed change gears, wherein the housing is formed with a first support portion for supporting a fixing member for tackedly fixing the drive shaft to the housing to be unable to rotate.

According to the method of integrating the vehicle, the vehicle and the shift actuator, the position sensor can be attached to the housing in a state of tackedly fixing the drive shaft and therefore, a position of the position sensor can easily be adjusted. Further, separately from the shift power transmitting mechanism, the position of the position sensor can be adjusted by a single member of the shift actuator. Therefore, integration performance can be promoted. Further, the length of the shift power transmitting mechanism can be adjusted in the state of tackedly fixing the drive shaft and therefore, in comparison with the background art of adjusting the length while looking at the output value of the sensor, adjusting operation can be simplified. In addition thereto, the length of the shift power transmitting mechanism can be adjusted independently from adjustment of the position of attaching the position sensor and therefore, integration performance and maintenance performance can be promoted.

According to the above teaching, the convenience in carrying out a calibration of the shift actuator can be promoted and integration performance and maintenance performance of the vehicle can be promoted.

The description above further discloses a preferred embodiment of a method of integrating a vehicle which is a method of integrating a vehicle comprising: a shift mechanism including a plurality of stages of speed change gears; a shift actuator including a drive shaft, a housing for rotatably supporting the drive shaft, and a position sensor supported by the housing for detecting a rotational position of the drive shaft for driving the shift mechanism; and a shift power transmitting mechanism for connecting the shift mechanism and the shift actuator and capable of adjusting a length thereof, the method comprising: a step of tackedly fixing the drive shaft to the housing to be unable to rotate; a step of attaching the position sensor to the housing in a state in which the drive shaft is made to be unable to rotate relative to the housing; and a step of adjusting the length of the shift power transmitting mechanism in the state in which the drive shaft is made to be unable to rotate relative to the housing.

The description further discloses a preferred embodiment of a vehicle comprising: a shift mechanism including a plurality of stages of speed change gears; a shift actuator including a drive shaft, a housing for rotatably supporting the drive shaft, and a position sensor supported by the housing for detecting a rotational position of the drive shaft for driving the shift mechanism; and a shift power transmitting mechanism for connecting the shift mechanism and the shift actuator and capable of adjusting a length thereof; wherein the housing is formed with a first support portion for supporting a fixing member for tackedly fixing the drive shaft to the housing to be unable to rotate.

Preferably, the vehicle further comprises: a lever pivoted cooperatively with rotation of the drive shaft; wherein the lever is formed with a second support portion for supporting the fixing member for tackedly fixing the drive shaft to the housing to be unable to rotate.

According to a further preferred embodiment, a portion of the drive shaft is projected from the housing, the lever is attached to the portion of the drive shaft projected from the housing such that at least a portion of the lever is disposed at an outer portion of the housing, the first support portion is formed at an outer surface of the housing, and the second support portion is formed at the portion of the lever disposed at the outer portion of the housing.

Further, preferably the fixing member is a rod-like member, the first support portion is a recess portion inserted with the fixing member, and the second support portion is a through insertion portion to which the fixing member is inserted.

Further, preferably the recess portion is a bottomed hole, and the through insertion portion is a through hole.

Further, preferably the vehicle is a riding type vehicle.

The description further discloses a preferred embodiment of a shift actuator which is a shift actuator comprising a drive shaft, a housing for rotatably supporting the drive shaft, and a position sensor supported by the housing for detecting a rotational position of the drive shaft for driving a shift mechanism including a plurality of speed change gears; wherein the housing is formed with a first support portion for supporting a fixing member for tackedly fixing the drive shaft to the housing to be unable to rotate.

According to a preferred embodiment, the shift actuator further comprises: a lever pivoted cooperatively with rotation of the drive shaft; wherein the lever is formed with a second support portion for supporting the fixing member for tackedly fixing the drive shaft to the housing to be unable to rotate.

The description still further discloses, as a particularly preferred embodiment, in order to promote convenience and certainty in carrying out calibration of a shift actuator in a vehicle having the shift actuator, an embodiment of a shift actuator which includes a drive shaft 70g, a housing 70h for rotatably supporting the drive shaft 70g, and a shift position detecting apparatus for detecting a rotational position of the drive shaft 70g, wherein the drive shaft 70g is connected to a shift mechanism by way of an operating lever 70j and a shift rod and the like, the operating lever 70j and the housing 70h are respectively formed with a through hole 70m and a bottomed hole 70n, in integrating the shift actuator, the drive shaft 70g is tackedly fixed by inserting a lever positioning pin 80 into the through hole 70m and the bottomed hole 70n, and in a state of tackedly fixing the drive shaft 70g, the shift position detecting apparatus is attached to the housing 70h and a length of the shift rod is adjusted.

## Claims

1. Method of assembling a vehicle, said vehicle comprising a shift mechanism (43) including a plurality of stages of speed change gears (49,420); a shift actuator (70) including a drive shaft (70g), a housing (70h), a first support portion (70n) for a fixing member (80), and a position sensor (S2) for detecting a rotational position of the drive shaft (70g) for driving the shift mechanism (43); and a shift power transmitting mechanism (75) for connecting the shift mechanism (43) and the shift actuator (70) and capable of adjusting a length thereof,
the method comprising the steps:
using the fixing member (80) to temporarily fix the drive shaft (70g) relative to the housing (70h) so it is unable to rotate;
attaching the position sensor (S2) to the shift actuator (70) in a state in which the drive shaft (70g) is temporarily made to be unable to rotate relative to the housing (70h);
adjusting a length of the shift power transmitting mechanism (75) in the state in which the drive shaft (70g) is temporarily made to be unable to rotate relative to the housing (70h).

2. Method according to claim 1, wherein the drive shaft (70g) is rotatably supported by the housing (70h), and wherein the drive shaft (70g) is temporarily fixed to the housing (70h) to be unable to rotate relative to the housing (70h).

3. Method according to claim 1 or 2, wherein the position sensor (S2) is supported by the housing (70h).

4. Shift actuator comprising a drive shaft (70g), a housing (70h), and a position sensor (S2) for detecting a rotational position of the drive shaft (70g) for driving a shift mechanism (43) including a plurality of speed change gears (49,420);
**characterized in that**
the shift actuator is formed with a first support portion (70n) which supports a fixing member (80), said fixing member (80) being able to temporarily fix the drive shaft (70g) to the shift actuator so it is unable to rotate.

5. Shift actuator according to claim 4, **characterized in that** the drive shaft (70g) is supported by the housing (70h), wherein the housing is providing with the first support portion (70n) adapted to temporarily fix the drive shaft (70g) relative to the housing (70h).

6. Shift actuator according to claim 4 or 5, **characterized in that** the position sensor (S2) is supported by the housing.

7. Shift actuator according to one of the claims 4 to 6, **characterized by** a lever (70j) pivoted cooperatively with rotation of the drive shaft (70g), wherein the lever (70j) is formed with a second support portion (70m) adapted to support the fixing member (80) for temporarily fixing the drive shaft (70g) to the housing (70h) to be unable to rotate.

8. Shift actuator according to claim 7, **characterized in that** a portion of the drive shaft (70g) is projected from the housing (70h), the lever (70j) is attached to that portion of the drive shaft (70g), which is projected from the housing (70h) such that at least a portion of the lever (70j) is disposed at an outer portion of the housing (70h), the first support portion (70n) is formed at an outer surface of the housing (70h), and the second support portion (70m) is formed at the portion of the lever (70j) disposed at the outer portion of the housing (70h).

9. Shift actuator according to claim 8, **characterized in that** the fixing member (80) is a rod-like member, the first support portion (70n) is a recess portion inserted with the fixing member (80), and the second support portion (70m) is a through insertion portion to which the fixing member (80) is inserted.

10. Shift actuator according to claim 9, **characterized in that** the recess portion (70n) is a bottomed hole, and the through insertion portion (70m) is a through hole.

11. Vehicle, comprising a shift mechanism (43) including a plurality of stages of speed change gears (49,420) and a shift actuator (70) according to at least one of the claims 4 to 10.

## Patentansprüche

1. Verfahren der Montage eines Fahrzeuges, wobei das Fahrzeug aufweist eine Schaltvorrichtung (43), enthaltend eine Mehrzahl von Stufen der Gangwechselrädem (49, 420); einen Schaltbetätiger (70), der eine Antriebswelle (70g) enthält, ein Gehäuse (70h), einen ersten Lagerungsabschnitt (70a) für ein Befestigungsteil (80) und einen Positionssensor (S2) zum Erfassen einer Drehposition der Antriebswelle (70g) zum Antreiben der Schaltvorrichtung (43); und eine Schaltenergie- Übertragungsvorrichtung (75) zum Verbinden der Schaltvorrichtung (43) und des Schaltbetätigers (70) und der in der Lage ist, eine Länge derselben einzustellen,
wobei das Verfahren die Schritte aufweist von:
Verwenden des Befestigungsteils (80) zum zeitweilig Feststellen der Antriebswelle (70g) relativ zu dem Gehäuse (70h), so dass sie nicht in der Lage ist, sich zu drehen;
Verbinden des Positionssensors (S2) mit dem Schaltbetätiger (70) in einem Zustand, in dem die Antriebswelle (70g) zeitweilig veranlasst wird, relativ zu dem Gehäuse (70h) nicht drehbar zu sein;
Einstellen einer Länge der Schaltenergie- Übertragungsvorrichtung (75) in dem Zustand, in dem die Antriebswelle (70g) vorübergehend in die Lage gebracht ist, sich nicht in Bezug auf das Gehäuse (70h) zu drehen.

2. Verfahren nach Anspruch 1, wobei die Antriebswelle (70g) durch das Gehäuse (70h) drehbar gelagert ist und wobei die Antriebswelle (70g) zeitweilig an dem Gehäuse (70h) fixiert ist, um nicht in der Lage zu sein, sich relativ zu dem Gehäuse (70h) zu drehen.

3. Verfahren nach Anspruch 1 oder 2, wobei der Positionssensor (S2) durch das Gehäuse (70h) gelagert ist.

4. Schaltbetätiger, aufweisend eine Antriebswelle (70g), ein Gehäuse (70h) und einen Positionssensor (S2) zum Erfassen einer Drehposition der Antriebswelle (70g) zum Antreiben einer Schaltvorrichtung (43), die eine Mehrzahl von Gangwechselrädem (49, 420) enthält;
**dadurch gekennzeichnet, dass**
der Schaltbetätiger mit einem ersten Lagerabschnitt (70n) gebildet ist, der ein Befestigungsteil (80) lagert, wobei das Befestigungsteil (80) in der Lage ist, zeitweilig die Antriebswelle (70g) an dem Schaltbetätiger festzulegen, so dass sie nicht in der Lage ist, sich zu drehen.

5. Schaltbetätiger nach Anspruch 4, **dadurch gekennzeichnet, dass** die Antriebswelle (70g) durch das Gehäuse (70h) gelagert ist, wobei das Gehäuse (70h) versehen ist mit dem ersten Lagerabschnitt (70n), vorgesehen um zeitweilig die Antriebswelle (70g) an dem Gehäuse (70h) festzulegen.

6. Schaltbetätiger nach Anspruch 4 oder 5, **dadurch gekennzeichnet, dass** der Positionssensor (S2) durch das Gehäuse (70h) gelagert ist.

7. Schaltbetätiger nach einem der Ansprüche 4 bis 6, **gekennzeichnet durch** einen Hebel (70j), schwenkbar zusammenwirkend mit der Drehung der Antriebswelle (70g), wobei der Hebel (70j) mit einem zweiten Lagerabschnitt (70m) gebildet ist, vorgesehen das Befestigungsteil (80) zum zeitweiligen Festlegen der Antriebswelle (70g) an dem Gehäuse (70h), so dass dieses nicht in der Lage ist, sich zu drehen.

8. Schaltbetätiger nach Anspruch 7, **dadurch gekennzeichnet, dass** ein Abschnitt der Antriebswelle (70g) von dem Gehäuse (70h) vorspringt, der Hebel (70j) mit dem Abschnitt der Antriebswelle (70g) verbunden ist, der von dem Gehäuse (70h) derart vorspringt, dass zumindest ein Abschnitt des Hebels (70j) an einem äußeren Abschnitt des Gehäuses (70h) angeordnet ist, der erste Lagerabschnitt (70n) an einer Außenoberfläche des Gehäuses (70h) gebildet ist, und der zweite Lagerabschnitt (70m) an dem Abschnitt des Hebels (70j), angeordnet an dem äußeren Abschnitt des Gehäuses (70h), gebildet ist.

9. Schaltbetätiger nach Anspruch 8, **dadurch gekennzeichnet, dass** das Befestigungsteil (80) ein stabförmiges Teil ist, der erste Lagerabschnitt (70n) ein Aussparungsabschnitt, eingesetzt mit dem Befestigungsteil (80), ist und der zweite Lagerabschnitt (70m) ein Durchgangseinsetzabschnitt ist, in den das Befestigungsteil (80) eingesetzt ist.

10. Schaltbetätiger nach Anspruch 9, **dadurch gekennzeichnet, dass** der Aussparungsabschnitt (70n) eine Grundbohrung ist und der Durchgangseinsetzabschnitt (70m) eine Durchgangsbohrung ist.

11. Fahrzeug, aufweisend eine Schaltvorrichtung (43), die eine Mehrzahl von Gangwechselrädem (49, 420) und einen Schaltbetätiger (70) nach zumindest einem der Ansprüche 4 bis 10 aufweist.

## Revendications

1. Procédé d'assemblage d'un véhicule, ledit véhicule comprenant un mécanisme de changement de vitesses (43), incluant une pluralité de rapports de roues dentées de changement de vitesses (49, 420), un actionneur de changement de vitesses (70), incluant un arbre d'entraînement (70g), un boîtier (70h), une première partie support (70n) pour un organe de fixation (80), et un capteur de position (S2), pour détecter une position en rotation de l'arbre d'entraînement (70g), pour actionner le mécanisme de changement de vitesses (43) ; et un mécanisme de transmission d'énergie de manoeuvre (75) pour relier le mécanisme de changement de vitesses (43) et l'actionneur de changement de vitesses (70) et capable d'ajuster sa longueur,
le procédé comprenant les étapes consistant à :
utiliser l'organe de fixation (80) pour fixer temporairement l'arbre d'entraînement (70g) par rapport au boîtier (70h), de manière qu'il ne puisse tourner ;
attacher le capteur de position (S2) à l'actionneur de changement de vitesses (70), en un état dans lequel l'arbre d'entraînement (70g) est rendu temporairement incapable de tourner par rapport au boîtier (70h).

2. Procédé selon la revendication 1, dans lequel l'arbre d'entraînement (70g) est supporté à rotation par le boîtier (70h), et dans lequel l'arbre d'entraînement (70g) est temporairement fixé au boîtier (70h) de manière à être empêché de tourner par rapport au boîtier (70h).

3. Procédé selon la revendication 1 ou 2, dans lequel le capteur de position (S2) est supporté par le boîtier (70h).

4. Actionneur de changement de vitesses, comprenant un arbre d'entraînement (70g), un boîtier (70h) et un capteur de position (S2), pour détecter une position en rotation de l'arbre d'entraînement (70g) pour actionner un mécanisme de changement de vitesses (43), incluant une pluralité de roues dentées de changement de vitesses (49, 420),
**caractérisé en ce que**
l'actionneur de changement de vitesses est formé d'une première partie support (70n), supportant un organe de fixation (80), ledit organe de fixation (80) étant en mesure de fixer temporairement l'arbre d'entraînement (70g) à l'actionneur de changement de vitesses, de manière qu'il soit empêché de tourner.

5. Actionneur de changement de vitesses selon la revendication 4, **caractérisé en ce que** l'arbre d'entraînement (70g) est supporté par le boîtier (70h), dans lequel le boîtier est muni de la première partie support (70n), adaptée pour fixer temporairement l'arbre d'entraînement (70g) par rapport au boîtier (70h).

6. Actionneur de changement de vitesses selon la revendication 4 ou 5, **caractérisé en ce que** le capteur de position (S2) est supporté par le boîtier.

7. Actionneur de changement de vitesses selon l'une des revendications 4 à 6, **caractérisé par** un levier (70j), coopérant, en pivotement, avec la rotation de l'arbre d'entraînement (70g), dans lequel le levier (70j) est muni d'une deuxième partie support (70m), adaptée pour supporter l'organe de fixation (80), de manière à fixer temporairement l'arbre d'entraînement (70g) au boîtier (70h), afin de l'empêcher de tourner.

8. Actionneur de changement de vitesses selon la revendication 7, **caractérisé en ce qu'**une partie de l'arbre d'entraînement (70g) fait saillie du boîtier (70h), **en ce que** le levier (70j) est attaché à la partie de l'arbre d'entraînement (70g), faisant saillie du boîtier (70h) de manière qu'au moins une partie du levier (70j) soit disposée à une partie extérieure du boîtier (70h), **en ce que** la première partie support (70n) est formée en une surface extérieure du boîtier (70h), et **en ce que** la deuxième partie support (70m) est formée à la partie du levier (70j) disposée à la partie extérieure du boîtier (70h).

9. Actionneur de changement de vitesses selon la revendication 8, **caractérisé en ce que** l'organe de fixation (80) est un organe analogue à une tige, la première partie support (70n) est une partie en cavité dans laquelle l'organe de fixation (80) est inséré, et la deuxième partie support (70m) est une partie d'insertion traversante, dans laquelle l'organe de fixation (80) est inséré.

10. Actionneur de changement de vitesses selon la revendication 9, **caractérisé en ce que** la partie en cavité (70n) est un trou borgne, et la partie d'insertion traversante (70m) est un trou traversant.

11. Véhicule, comprenant un mécanisme de changement de vitesses (43) incluant une pluralité de rapports de roues dentées de changement de vitesses (49, 420), et un actionneur de changement de vitesses (70) selon au moins l'une des revendications 4 à 10.
